# EUROPEAN PATENT SPECIFICATION

(11) **EP 4 003 786 B1**
(45) Date of publication and mention of the grant of the patent: **25.10.2023**
(21) Application number: 20751476.1
(22) Date of filing: 23.07.2020
(51) Int. Cl.: B60R 1/04, B60R 1/08, B60R 1/12

(54) **INTERNAL REARVIEW DEVICE AND VEHICLE**
INNENRÜCKBLICKVORRICHTUNG UND FAHRZEUG
DISPOSITIF DE RÉTROVISEUR INTERNE ET VÉHICULE

(30) Priority: 29.07.2019 DE 102019120396; 29.07.2019 US 201916524953
(43) Date of publication of application: 01.06.2022
(73) Proprietor: Motherson Innovations Company Limited, London EC2N 2AX (GB)
(72) Inventor: HERRMANN, Andreas, 70327 Stuttgart (DE); HAN, Chang Kyun, Cheongju-si Chungcheongbuk-do 363-911 (KR); YIM, Cheol Ho, Cheongju-si Chungcheongbuk-do 363-911 (KR); HUH, Ho Jin, Cheongju-si Chungcheongbuk-do 363-911 (KR); HONG, Won Sik, Cheongju-si Chungcheongbuk-do 363-911 (KR); CHOI, Geon Young, Cheongju-si Chungcheongbuk-do 363-911 (KR); LIM, Chang Hwan, Cheongju-si Chungcheongbuk-do 363-911 (KR); ALI, Freshipali, Cheongju-si Chungcheongbuk-do 363-911 (KR)
(74) Representative: Weber-Bruls, Dorothée
(86) International application number: PCT/EP2020/070774
(87) International publication number: WO 2021/018718

(56) References cited:
- US-A1- 2005 152 054
- US-A1- 2013 187 017
- US-A1- 2014 192 431

## Description

The present disclosure refers to an internal rearview device according to the preamble of claim 1 and a vehicle therewith.

There are numerous different internal rearview devices available on the market with different functionalities. In the following reference is made to two documents of the applicant illustrating the spectrum of such devices.

EP 3 126 935 B1 relates to a pivotable interior mirror for a vehicle, having a pivoting device which is designed to move the interior mirror from a normal position to a dimming position, wherein in the dimming position a glare of a driver of the vehicle by the inner mirror is reduced; and an operating device configured to activate the pivoting device in response to a movement of the driver.

A rearview device including a housing, a bezel and a rearview element used for vehicles is known from WO 2018/167096 A1. In one embodiment the bezel includes a transparent or chrome-based coating as to allow one or more lighting assemblies positioned in or beneath the bezel to illuminate the surrounding and provide different functions to the driver or other persons. For example, different indicator functions can be provided. Different electronic means may be placed in or beneath the bezel to optimize the used space inside the rearview device.

Further, it is known to provide an internal rearview device with an human machine interface (HMI), in particular comprising a capacitive touch panel. EP 3 017 545 A1 of the applicant discloses a capacitive touch panel comprising a transparent panel substrate, a front surface of the substrate comprising a conductive translucent layer which, in use, is visible to a user; at least one light source associated with the back surface, wherein said light source is switchable between an 'on' state in which an illuminated icon is visible on the front surface of the cover panel and an 'off state in which the illuminated icon is not visible on the front surface of the cover panel, wherein the light source is switchable from the off state to the on state by a change in capacitance of the conductive translucent layer; at least one switch associated with the back surface, wherein the switch is activable by a user pressing the touch panel in the vicinity of the illuminated icon to provide an output signal capable of performing a function.

Nowadays internal rearview devices equipped with a dimming function often make usage of an electrochromic reflective elements. US 2013/0252979 A1 discloses a special electrochromic element with an electrolyte layer which may be a solid but not yet used in rearview devices.

US 2012/0236388 A1 refers to an interior rearview mirror assembly including a housing and a mirror reflective element having a glass substrate. The housing includes an element that protrudes beyond a rear surface of the glass substrate and towards the front surface of the glass substrate when the reflective element is at least partially received at the housing. The glass substrate includes a slanted rear perimeter edge-portion along a perimeter circumference of the rear surface of the glass substrate to at least partially accommodate the element of the housing when the reflective element is at least partially received at the housing. The glass substrate includes a beveled front perimeter along a perimeter circumference of the front surface of the glass substrate. The beveled front perimeter of the glass substrate is exposed and viewable by the driver of the vehicle.

WO 2012/051294 A1 teaches a rearview assembly having a mounting structure configured to be operably coupled with a vehicle. A housing is operably connected with the mounting structure and a rearward viewing device is supported by one of the housing and the mounting structure. The rearward viewing device provides a rearward view to a vehicle driver and includes a front substrate and a rear substrate. The entire front surface of the front substrate is exposed and the entire rear substrate is positioned behind the front substrate. A concealing layer is disposed about a periphery of the rearward viewing device between the front substrate and the rear substrate. A partially optically transparent bezel is disposed adjacent to both the rearward viewing device and the housing, the optically transparent bezel having an edge radius greater than 2.5 mm and the optically transparent bezel being substantially flush with the front surface of the front substrate.

EP 3 126 935 B1 teaches a pivotable internal mirror for a vehicle, with a mirror surface, in particular in the form of a first surface of a wedge mirror, a sensor device for detecting at least one gesture of a driver of the vehicle and/or light impinging on the first surface of the wedge mirror, and a pivoting device for pivoting the mirror surface from a normal position into at least one anti-glare position, in which a glare experienced by the driver as a result of light reflected at the mirror surface is reduced, the pivoting device being activatable as a function of at least one output signal from the sensor device, wherein the sensor device is suitable for measuring a light propagation time and is a component of an operator control device for the pivoting device, wherein the operator control device detects motion patterns within a first region of the internal mirror and/or provides at least one virtual button within a second region of the internal mirror.

WO 2017/191558 A1 refers to an electro-optic rearview mirror assembly for a vehicle includes a caseless electro- optic rearview mirror reflective element and a plate attached at the rear of the reflective element. The mirror reflective element connected to and pivotal about a windshield electronics module via a ball and socket pivot joint. Control circuitry may be disposed in a windshield electronics module for automatically controlling dimming of the electro-optic medium or alternatively, dimming of the electro-optic medium is automatically controlled via a multifunctional rear backup camera system of the equipped vehicle. Optionally, the control circuitry controls dimming of the electro-optic medium of the mirror reflective element via wiring that passes through the ball and socket pivot joint. Optionally, image data captured by the multifunctional rear backup camera may be used for ambient light determination and to provide video image display at the interior rearview mirror assembly.

US 2015/0334354 A1 refers to a visor assembly for a vehicle includes a visor element configured to pivotally attach at an interior portion of a vehicle so as to be pivotable between a non-use position, where the visor is disposed along a roof of the vehicle, and a use position, where the visor element is disposed at least partially along a windshield of the vehicle. A vanity mirror reflective element includes a glass mirror substrate and a mirror reflector coating. The vanity mirror reflective element is disposed at the visor element so as to be viewable by a driver of the vehicle when the visor element is pivoted to the use position. The mirror substrate has a rounded perimeter edge that is exposed at the visor element and is viewable by the driver of the vehicle when the visor element is pivotally attached at the interior portion of the vehicle and in the use position.

US 2014/192431 A1 describes a rearview assembly for a vehicle according to the preamble of claim 1, comprising a rearview device including a peripheral edge; a carrier plate operably coupled to the rearview device, the carrier plate including a peripheral wall with a forward edge and a rearward edge, wherein the forward edge is substantially aligned with the peripheral edge of the rearview device; and a housing including a forward lip configured to abut the rearward edge of the peripheral wall to provide a substantially smooth exterior transition from the housing to the peripheral wall to the rearview device.

Despite the large amount of internal rearview mirrors known, there is still the need to enhance functionality and design of the same. The object of the present disclosure is to further develop the known internal rear view device in order to overcome the drawbacks of the prior art. Thus, an optically appealing internal rearview device is to be provided which preferably allows special light effects as well as an easy to actuate human machine interface.

This object is solved by the features of the characterizing portion of claim 1.

Accordingly, the present invention provides an internal rearview device that is adapted for use with a motor vehicle, comprising: a rearview element comprising at least one of a reflective element and a display element; a bezel surrounding the rearview element and being surrounded by a housing; and a mount assembly which is configured to attach the housing to the vehicle. The perimeter edge of the bezel is exposed to and is viewable by the driver of the vehicle when said device is normally mounted in the vehicle; and said perimeter edge comprises a curved surface disposed between the front and/or reflective surface of the rearview element and the housing; and the housing is provided with a protrusion projecting edgewise, beyond the curved surface of the perimeter edge such that it is viewable by the driver when said device is normally mounted in the vehicle. The protrusion can provide a step with a height between 0.1 and 2.1 mm, and/or the curvature of the curved surface can have a radius of at least 2,5 mm. The curved surface of the perimeter edge of the bezel ensures safety by avoiding any edges which might cause injuries of a driver or another person inside the vehicle.

According to the present disclosure it is preferred that the internal rearview device further comprises at least one or more light assemblies preferably being positioned at least partly EUI-1212990512v2 within the interior space of the bezel and/or emitting light into the bezel acting as a light guide to illuminate at least a region between the housing and the rearview element and/or to provide actuation means.

In this respect it is preferred that the one or more light assemblies are configured to direct a plurality of different color lights to an entire surface of the bezel so that the entire bezel can have one color at a time, and/or the one or more light assemblies are configured to provide a plurality of different color lights to different zones of the bezel so that different zones of the bezel can have different colors at a time, and/or the one or more light assemblies are configured to direct light of a selected brightness and/or color to at least one selected region or the entire surface of the bezel.

Still further, according to the present disclosure it is proposed that the bezel is made of a plastic substrate which is at least one of colored, surface finished, transparent, and coated; and/or the bezel is coated and a coating of the bezel is at least one of a decorative coating, an advanced surface technology surface coating, and a spectrally controlling system; and/or the bezel is formed or molded from a polymeric substrate.

Further advantages are provided when the bezel exhibits reflective features, wherein the bezel is transparent and includes a chromium-based coating, in particular making the one or more light assemblies beneath the bezel hidden until lit, wherein preferably the chromium-based coating is an alloy of chromium and a dopant material, the dopant material being selected from hexagonally close-packed transition metals, the alloy having a crystal structure of a primary body-centered cubic phase in coexistence with a secondary omega hexagonally close-packed phase.

It is preferred that the perimeter edge and/or the curved surface is provided with the chromium-based coating, and/or the perimeter edge and/or the curved surface is provided with at least one sensor of the sensor means and/or at least one element of actuation, comprising in particular a mark, icon and/or cut-out providing a virtual button.

According to embodiments at least one printed circuit board can be provided, which is arranged between the housing and the rearview element, and/or control means can be provided, which is connected to the one or more light assemblies and/or comprises sensor means connected to the at least one printed circuit board.

A very simple structure according to the present disclosure is characterized in that the bezel is provided by a housing cover, and the at least one printed circuit board, the sensor means and/or the one or more light assemblies is/are positioned at least partly between the housing cover and the housing, with the housing cover preferably comprising a support part for the reflective element being provided with at least one opening in particular for access to the printed circuit means and/or at least one window in particular for transmission of radiation to a sensor of the sensor means.

With the present disclosure it is proposed that the sensor means comprises at least one first sensor in the form of a TOF (Time of Flight) sensor, in particular comprising a TOF camera, and/or at least one second sensor for performing an ALS (Ambient Light Sensor) function, and/or at least one third sensor in the form of a photo electric sensor, in particular to be irradiated by an additional light source arranged within the vehicle, and/or at least one fourth sensor in the form of a touch sensor, preferably providing a virtual button.

In this respect it is preferred that the first sensor, a first second sensor, a first third sensor and/or a first fourth sensor is mounted on the side of the device featuring the reflective surface of the rearview element, in particular on the reflective surface or behind the reflective surface, preferably provided with a window for transmission of radiation; and/or a second second sensor is mounted on the opposite side of the device from the reflective surface or behind the reflective surface, preferably provided with a window for transmission of radiation, and/or a second third sensor and/or a second fourth sensor is mounted on or in the bezel; and/or a third third sensor and/or a third fourth sensor is mounted on or in the housing.

Still further, the present disclosure proposes that the internal rearview device comprises at least one actuation means, preferably comprising one or more buttons, in particular virtual buttons, mounted on or in the bezel, the housing and/or on the reflective element, preferably comprising a touch sensor and/or being surveilled by a camera, connected to the control means.

It is also proposed that the control means is suited to detect motion patterns within a first spacing interval relative to the reflective surface and/or provides at least one virtual button within a second spacing interval, with preferably the first spacing interval being provided in the first region of the control means and the second spacing interval being provided in the second region of the control means, in particular the second spacing interval being arranged closer to the reflective surface than the first spacing interval.

With the present disclosure it is further proposed that the control means is configured to be connected to a control unit of the vehicle, in particular to take the state of the vehicle and/or the surroundings of the vehicle into consideration when controlling the device.

It can also be the case that the rearview element has a normal state and at least one anti-glare state, in which a glare experienced by a driver of the vehicle as a result of light reflected at the rearview element is reduced, with the reflective element in particular comprising an electrochromic element, which is preferably controlled via the control means.

Preferred embodiments of the internal rearview device of the present disclosure are characterized in that the printed circuit board is fixed to the housing, preferably in form of an EC printed circuit board and/or a sensor and/or actuation means printed circuit board.

It is also proposed that the printed circuit board is shaped, bent and/or provided with at least one cut-out to avoid interference with connection means of the mount assembly.

The present disclosure further provides a vehicle equipped with an internal rearview device of the disclosure.

Such a vehicle can comprise at least one camera and/or light source to detect the actuation of the actuation means.

The foregoing summary, as well as the following detailed description, will be better understood when read in conjunction with the appended drawings. For the purpose of illustration, there is shown in the drawings certain embodiments of the present disclosure. It should be understood, however, that the disclosure is not limited to the precise arrangements and instrumentalities shown. The accompanying drawings, which are incorporated in and constitute a part of this specification, illustrate an implementation of devices consistent with the present disclosure in a schematic manner and, together with the description, serve to explain advantages and principles consistent with the disclosure.
- FIG. 1a: is a front view of an internal rearview device of a first embodiment of the disclosure;
- FIG. 1b: is an exploded view of the internal rearview device of FIG. 1a;
- FIG. 2: is an exploded view of an internal rearview device of a second embodiment of the disclosure;
- FIG. 3a: is a front view of a housing carrying a printed circuit board;
- FIG. 3b: is an exploded view of the housing carrying an alternative printed circuit board with a housing cover;
- FIG. 3c: is an exploded view of the housing carrying the printed circuit board and the housing cover as well as an reflective element of an internal rearview device of a third embodiment of the disclosure;
- FIG. 4a: is a sectional view of an internal rearview device of a fourth embodiment of the disclosure;
- FIG. 4b: is an enlargement of a part of FIG 4a;
- FIG. 4c: is an enlargement of a part alternative to the one of FIG 4b of an internal rearview device of a fifth embodiment of the disclosure;
- FIG. 5: is a perspective view of a part of an internal rearview device of a sixth embodiment of the disclosure;
- FIG. 6a) to f): illustrates an human machine interface (HMI) provided by an internal rearview device of a seventh embodiment of the disclosure; and
- FIG. 7: is a side view as well as a cross-sectional part view illustrating an example of a coupling state between the housing and the housing cover according to an embodiment of the present disclosure.

Before explaining examples of the present disclosure in detail, it is to be understood that the disclosure is not limited in its application to the details of construction and to the arrangements of the components set forth in the following description or illustrated in the drawings. The figures and written description are provided to teach any person skilled in the art to make and use the disclosure for which patent protection is sought. The disclosure is capable of other embodiments and of being practiced and carried out in various ways. Those skilled in the art will appreciate that not all features of a commercial embodiment are shown for the sake of clarity and understanding. Persons of skill in the art will also appreciate that the development of an actual commercial embodiment incorporating aspects of the present disclosures will require numerous implementation - specific decisions to achieve the developer's ultimate goal for the commercial embodiment. While these efforts may be complex and time-consuming, these efforts nevertheless would be a routine undertaking for those of skill in the art having the benefit of this disclosure.

In addition, it is to be understood that the phraseology and terminology employed herein are for the purpose of description and should not be regarded as limiting. For example, the use of a singular term, such as, "a" is not intended as limiting of the number of items. Also the use of relational terms, such as but not limited to, "top," "bottom," "left," "right," "upper," "lower," "down," "up," "side," "corner," are used in the description for clarity in specific reference to the figures and are not intended to limit the scope of the disclosure or the appended claims. Further, it should be understood that any one of the features of the disclosure may be used separately or in combination with other features. Other systems, methods, features, and advantages of the disclosure will be or become apparent to one with skill in the art upon examination of the figures and the detailed description. It is intended that all such additional systems, methods, features, and advantages be included within this description, be within the scope of the present disclosure, and be protected by the accompanying claims.

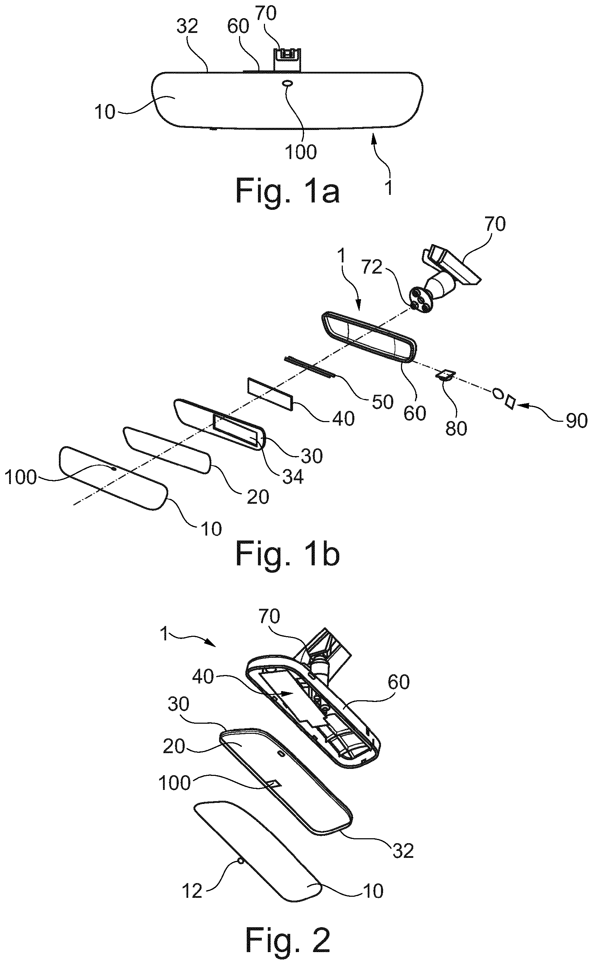

Figures 1a and 1b show an internal rearview device 1 of a first embodiment of the disclosure. The respective rearview device 1 is a multi-functional rearview device with a reflective element for example in form of an electrochromic (EC) glass 10.

Said EC glass 10 is attached to a double-sided adhesive tape 2 0 for attachment to a housing cover 30, which in turn is to be mounted to a housing 60 with an EC printed circuit board 40 and a button printed circuit board 50 arranged between the housing cover 30 and the housing 60. A button 80 is to be attached to the housing 60 and mounting means 90 are provided for that purpose, with a respective mounting been described in further detail below. The housing 60 is mounted on a mounting assembly 70 via a bolt 72 thereof, such that it can be attached to a not shown vehicle, for example the windshield thereof, and can be moved relative thereto.

A sensor 100 for example in form of a time of light (TOF) sensor is attached in the upper region of the EC glass 10, on the reflective surface thereof. Said sensor 100 is suited for controlling the dimming of the EC glass 10 and, therefore, is connected to the printed circuit board 40. For EUI-1212990512v2 the purpose of the connection, not only of the sensor 100 but also of the electrodes of the reflective element 10 the housing cover 30 is provided with an opening 34.

While the EC glass 10 is received in the housing cover 30 with a bezel 32 thereof surrounding the periphery of the reflective element 10, the housing cover 30 in turn is receives in the housing 60 with the housing 60 surrounding the periphery of the housing cover 30, which will be explained in further detail below.

In order to obtain a frameless like impression of the internal rearview mirror 1 in a front view as shown in figure 1a, the bezel 32 of the housing cover 30 at least can be covered by reflective coating, in particular a chromium-based coating as described for example in WO 2018/167096 A1. In addition, also the housing 60 can, at least partly, be provided with such a coating. However, it is to be noted and will be described later that a front view of the rearview device 1 provides a direct view not only of the EC glass 10 but also of the bezel 32 and the housing 60 surrounding the bezel 32.

Figure 2 shows the major components of an alternative internal rearview device 1 of the disclosure, which differs with respect to the one shown in figures 1a and 1b in that the sensor 100 is arranged behind the EC glass 10 allowing a transmission of radiation, which can either be by choosing a respectively reduced reflectivity of the EC glass 10 as such or by providing a window 12 of the reflective layer of the EC glass 10 in the region of the sensor 100.

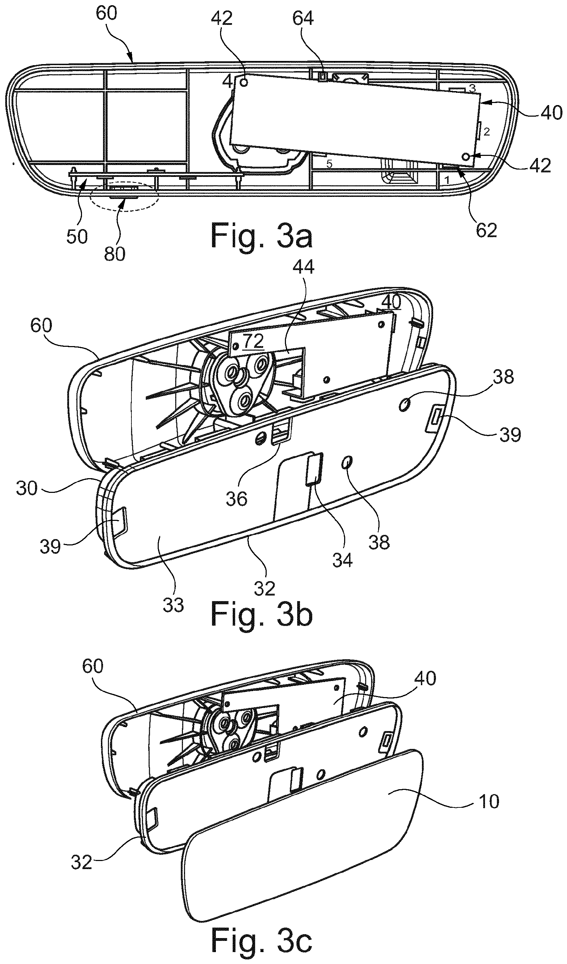

Figure 2 also shows that the EC printed circuit board 40 is fixed to the housing 60. This is shown in further detail in figure 3a, according to which the printed circuit board 40 is provided with two screw holes 42 and connected via a plurality of hooks 64 of the housing 60 to the housing 60. The housing 60, in addition, is provided with support ribs 62 for supporting the printed circuit board 40.

In addition, the printed circuit board 50 is also fixed to the housing 60 and connected to a button 80 of an HMI.

Figure 3b shows the housing 60 with an alternative EC circuit board 40, with said alternative EC circuit board 40 being provided with a cut-out 44 in order to avoid any interference with the bolt 72 of the mount assembly 70 via which the housing 60 is mounted to the vehicle.

Figure 3b also shows further details of the housing cover 30, not only being provided with the bezel 32 and a support part 33 for the EC glass 10 and the opening 34, but also with a through hole 36 to an additional or alternative sensor discussed below and with screw holes 38 and attachment means 39 facilitating an easy assembly.

Figure 3c shows the embodiment of figure 3b together with the EC glass 10 in an exploded view.

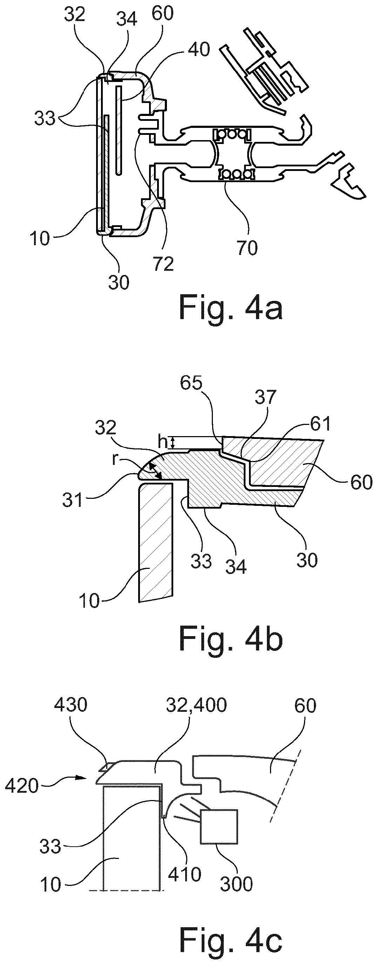

Figure 4a illustrates still further features in particular of the housing cover 30. Before turning to those features, it can, again, be seen in said figure that the EC printed circuit board 40 is overlapping the opening 34 provided in the support part 33 of the housing cover 30. The bezel 32 of the housing cover 30 surrounding the EC glass 10 is provided with rounded edges 31 at its periphery between the front of the EC glass 10 and the housing 60 in order to avoid injuries. Accordingly, the perimeter edge 31 comprises a curved surface disposed between the EC glass 10 and the housing 60 with a radius r of curvature of perferably 2,8 mm.

As can be best seen in figure 4b, the housing cover 30 is form fit to the housing 60 by being provided with a step 37 mating with a step 61 of the housing 60. The housing 60 also is provided with a protrusion 65 sideways extending beyond the housing cover 30 and, thus, the bezel 32 as well as the protrusion 65 are seen in a front view of the internal rearview device. The protrusion 65 also comprises a step with a height h of e.g. 1 mm. This structure allows for a multitude of functionalities as explained below.

Figure 4c shows one of said functionalities, with a light assembly 300 being arranged to emit light into the bezel 32 acting a light guide 400. For that purpose, a light receiving surface 410 with additional lens function is provided by the light guide 400, and the light guide 400 directs the light from the light assembly 300 to a light emitting surface 420 in the region of the rounded edge 31 between the EC glass 10 and the housing 60. This arrangement allows, for example, to provide a plurality of different optical effects with light of different intensities and/or colors being provided between the reflective element 10 and the housing 60.

Both, the intensity and the color of the light can provide information to the driver or just serve to enhance the appeal of the internal rearview device 1.

In addition to the above described light effects, the structure shown in figure 4c also allows for very simple HMI by providing the light emitting surface 42 0 e.g. with a laser cut-out virtual button 430 and, thus, providing actuation means. For example, when touching the virtual button 430 or even only coming close to said button with a finger light will be reflected back into the light guide 400 and in case the light assembly 300 is also provided with sensor means can be detected in order to detect an actuation.

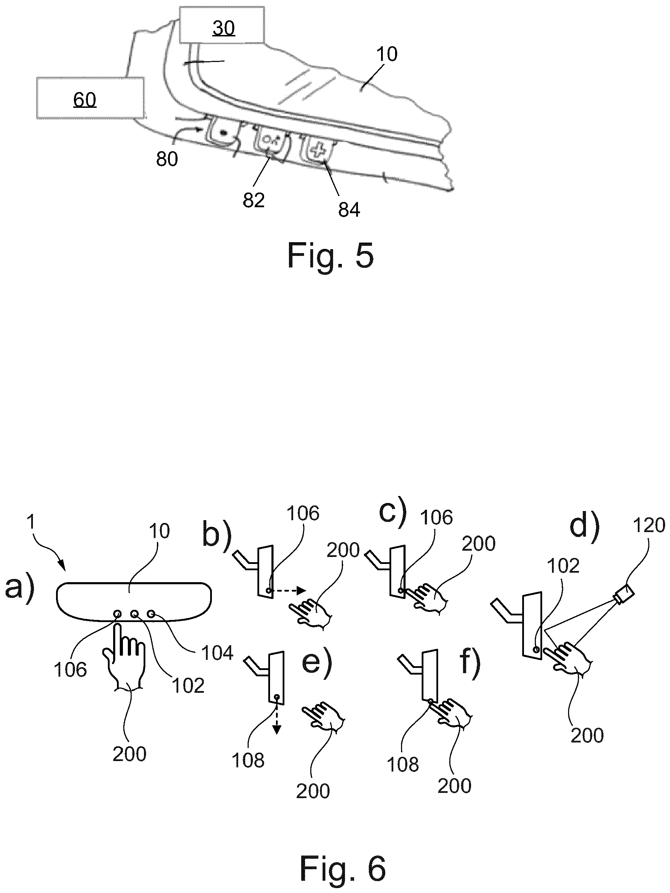

Different HMIs in connection with the multi-functional rearview device 1 of the disclosure are possible. Figure 5 shows an alternative possibility with buttons 80, 82 and 84 extending beyond the bezel 32.

With respect to figure 6 in the following one example of an HMI of the multi-functional rearview device 1 of the disclosure is described. As can be seen in figure 6a), three sensors 102, 104 and 106 are provided on the reflective surface of the EC glass 10. A first sensor 102 can be in form of a TOF sensor, a second sensor 104 can be in form of a touch sensor as described with respect to figure 4c, whereas the third sensor 106 can be a photo electric sensor.

Figures 6b) and c) explain the functioning of the photo electric sensor 106. For example such a sensor can be provided as a photo coupler emitting and receiving light, such that as long as no light is detected, as shown in figure 6b), no actuation is detected. However, as soon as the hand 200 of for example the driver approaches the sensor 106 as shown in figure 6c) a reflection takes place as a finger blocks the light and reflects the same. In this case, an actuation intention of the driver is detected and, for example, the dimming of the EC glass 10 is changed as a result thereof.

In order to better detect a gesture of a hand 200 in front of an internal rearview device 1 of the disclosure, in addition to the sensor 102 a camera 120 might be used as shown in figure 6d). Instead of providing sensors on the EC glass 10, it is also possible to arrange a further sensor 108 under the bottom of the housing 60 as shown in figure 6e). The respective sensor 108 can be a photo electric sensor and function identical to the sensor 106 detecting the actuation when the finger of the hand 200 approaches as shown in figure 6f).

Accordingly, with the disclosure a huge plurality of different actuation means or better alternative HMIs are possible, as the sensors not only have to be placed on the reflective element but also can be placed on the bezel or housing due to the fact that the bezel 32 surrounds the periphery of the reflective element 10 and the housing 60 surrounds the periphery of the bezel 32, as explained with respect in particular in figure 4b above.

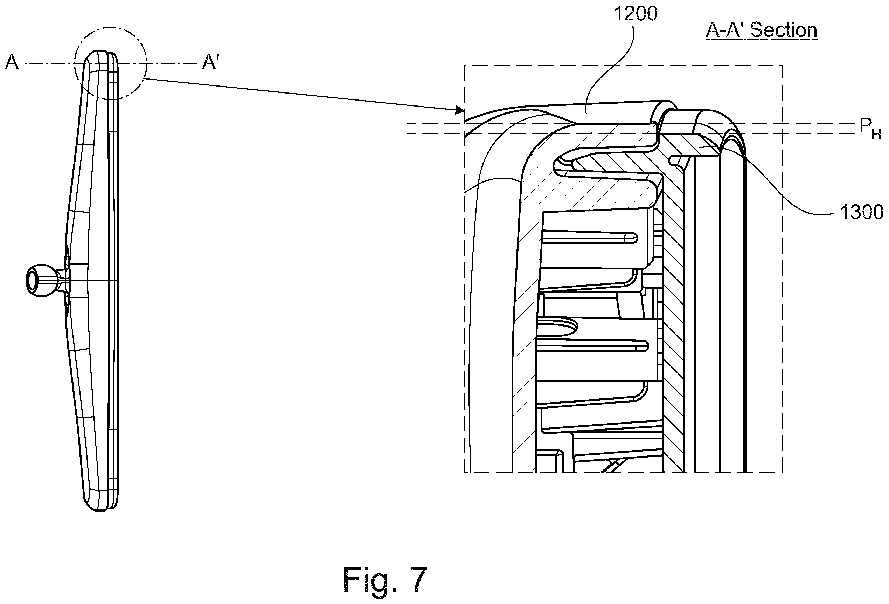

As illustrated in figure 7, the housing 60' according to an embodiment of the present disclosure is formed to be larger than the housing cover 30', with the peripheral length of the housing 60' being formed larger than a peripheral length of the housing cover 30'. For example, a predetermined protrusion or step 65' may be present between the housing 60' and the housing cover 30'. A peripheral surface extending from the housing 60' toward the housing cover 30' may form a naturally curved surface. Therefore, at least a portion of the periphery of the housing 60' is exposed to the driver.

The various embodiments of the internal rearview device 1 of the disclosure described above illustrate not only the multi-functionality thereof, comprising lighting functions for decorative and/or informative purposes, a dimming function, HMI function and the like, but also the design variety providing a particular pleasing appeal paired with implemented security features.

It will be appreciated by those skilled in the art that the disclosure is not restricted in its use to the particular application described. Neither is the present disclosure restricted in its preferred embodiments with regard to the particular elements and/or features described or depicted herein. It will be appreciated that the disclosure is not limited to the embodiment or embodiments disclosed, but is capable of numerous rearrangements, modifications and substitutions without departing from the scope of the disclosure as set forth and defined by the following claims.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

### Reference Signs

- 1: multi-function rearview device
- 10: EC glass
- 12: window
- 20: double sided adhesive tape
- 30, 30': housing cover
- 31: rounded edge
- 32: bezel
- 33: support part
- 34: opening
- 35: window
- 36: through hole
- 37: step
- 38: screw hole
- 39: attachment means
- 40: EC printed circuit board
- 42: screw hole
- 44: cut-out
- 50: button printed circuit board
- 60, 60': housing
- 61: step
- 62: support rib
- 64: hook
- 65, 65': protrusion
- 70: mount assembly
- 72: bolt
- 80 - 84: button
- 100: sensor
- 101: sensor area
- 102: sensor
- 103: cover layer
- 104 - 108: sensor
- 110: sensor
- 120: camera
- 200: hand
- 300: light assembly with sensor means
- 400: light guide
- 410: light receiving surface
- 420: light emitting surface
- 430: laser cut out virtual button

## Claims

1. An internal rearview device (1) adapted for use with a motor vehicle, comprising:
a rearview element comprising at least one of a reflective element (10) and a display element;
a bezel (32) surrounding the rearview element and being surrounded by a housing (60); and
a mount assembly (70) which is configured to attach the housing (60, 60') to the vehicle; wherein
the perimeter edge (31) of the bezel (32) is exposed to and is viewable by the driver of the vehicle when said device (1) is normally mounted in the vehicle;
said perimeter edge (31) comprises a curved surface disposed between the front and/or reflective surface of the rearview element (10) and the housing (60, 60');
**characterized in that**
the housing (60, 60') is provided with a protrusion (65, 65') projecting edgewise,
beyond the curved surface of the perimeter edge (31) of the bezel (32) such that it is viewable by the driver when said device (1) is normally mounted in the vehicle.

2. The device of claim 1, wherein
the protrusion (65, 65') provides a step with a height between 0.1 and 2.1 mm, and/or the curvature of the curved surface has a radius of at least 2,5 mm.

3. The device of claim 1 or 2, further comprising
at least one or more light assemblies (300), preferably being positioned at least partly within the interior space of the bezel and/or emitting light into the bezel (32) acting as a light guide (400) to illuminate at least a region between the housing (60) and the rearview element (10) and/or to provide actuation means (430).

4. The device of claim 3, wherein
the one or more light assemblies are configured to direct a plurality of different color lights to an entire surface of the bezel (32) so that the entire bezel (32) can have one color at a time, and/or
the one or more light assemblies are configured to provide a plurality of different color lights to different zones of the bezel (32) so that different zones of the bezel (32) can have different colors at a time, and/or
the one or more light assemblies are configured to direct light of a selected brightness and/or color to at least one selected region or the entire surface of the bezel (32).

5. The device of any of the preceding claims, wherein
the bezel (32) is made of a plastic substrate which is at least one of colored, surface finished, transparent, and coated; and/or
the bezel (32) is coated and a coating of the bezel (32) is at least one of a decorative coating, an advanced surface technology (AST) surface coating, and a spectrally controlling system; and/or
the bezel (32) is formed or molded from a polymeric substrate.

6. The device of claim 5, wherein
the bezel (32) is transparent and includes a chromium-based coating, in particular making the one or more light assemblies (300) beneath the bezel (32) hidden until lit, wherein
preferably the chromium-based coating is an alloy of chromium and a dopant material, the dopant material being selected from hexagonally close-packed transition metals, the alloy having a crystal structure of a primary body-centered cubic phase in coexistence with a secondary omega hexagonally close-packed phase.

7. The device of claim 5 or 6, wherein
the perimeter edge (31) and/or the curved surface is provided with the chromium-based coating, and/or
the perimeter edge (31) and/or the curved surface is provided with at least one sensor of the sensor means and/or at least one element of actuation means, comprising in particular a mark, icon and/or cut-out (430) providing a virtual button.

8. The device of any of the preceding claims, further comprising
at least one printed circuit board (40, 50), which is arranged between the housing (60) and the rearview element, and/or
control means connected to the one or more light assemblies and/or comprising sensor means connected to the at least one printed circuit board (40, 50).

9. The device of any of the claims 3 to 8, wherein
the bezel (32) is provided by a housing cover (30, 30'), and
the at least one printed circuit board (40, 50), the sensor means and/or the one or more light assemblies is/are positioned at least partly between the housing cover (30, 30') and the housing (60, 60'),
with the housing cover (30, 30') preferably comprising a support part (33) for the reflective element (10) being provided with at least one opening (34) in particular for access to the printed circuit means (40, 50) and/or at least one window (35) in particular for transmission of radiation to a sensor of the sensor means.

10. The device of claim 8 or 9, wherein
the sensor means comprises
• at least one first sensor (100, 102) in the form of a TOF (Time of Flight) sensor, in particular comprising a TOF camera, and/or
• at least one second sensor (110) for performing an ALS (Ambient Light Sensor) function, and/or
• at least one third sensor (106, 108) in the form of a photo electric sensor, preferably to be irradiated by an additional light source arranged within the vehicle, and/or
• at least one fourth sensor (104) in the form of a touch sensor, preferably providing a virtual button.

11. The device of claim 10, wherein
the first sensor (100, 102), a first second sensor, a first third sensor (106) and/or a first fourth sensor (104) is mounted on the side of the device (1) featuring the reflective surface of the rearview element (10), in particular on the reflective surface or behind the reflective surface, preferably provided with a window (12) for transmission of radiation; and/or
a second second sensor (110) is mounted on the opposite side of the device (1) from the reflective surface or behind the reflective surface, in particular provided with a window (12) for transmission of radiation; and/or
a second third sensor and/or a second fourth sensor is mounted on or in the bezel (32); and/or
a third third sensor (108) and/or a third fourth sensor is mounted on or in the housing (60).

12. The device of any of the preceding claims, further comprising
at least one actuation means, preferably comprising one or more buttons (80-84), in particular virtual buttons, mounted on or in the bezel (32), the housing (60) and/or on the reflective element (10), preferably comprising a touch sensor and/or being surveilled by a camera (120), connected to the control means.

13. The device of any one of the claims 8 to 12, wherein
the control means is suited to detect motion patterns within a first spacing interval relative to the reflective surface and/or provides at least one virtual button within a second spacing interval, with preferably the first spacing interval being provided in the first region of the control means and the second spacing interval being provided in the second region of the control means, in particular the second spacing interval being arranged closer to the reflective surface than the first spacing interval.

14. The device of any one of the claims 8 to 13, wherein
the control means is configured to be connected to a control unit of the vehicle, in particular to take the state of the vehicle and/or the surroundings of the vehicle into consideration when controlling the device (1).

15. The device of any one of the preceding claims, wherein
the rearview element has a normal state and at least one anti-glare state, in which a glare experienced by a driver of the vehicle as a result of light reflected at the rearview element is reduced, with the reflective element (10) in particular comprising an electrochromic (EC) element, which is preferably controlled by the control means. with the electrochromic element preferably including a first electrode.

16. The device of any one of the claims 8 to 15, wherein
the printed circuit board (40, 50) is fixed to the housing (60), preferably in form of an EC printed circuit board (40) and/or a sensor and/or actuation means printed circuit board (50).

17. The device of any one of the claims 8 to 16, wherein
the printed circuit board (40, 50) is shaped, bent and/or provided with at least one cut-out (44) to avoid interference with connection means (72) of the mount assembly (70).

18. A vehicle equipped with an internal rearview device of any one of the preceding claims.

19. The vehicle of claim 18, further comprising
at least one camera (120) and/or light source to detect the actuation of the actuation means.

## Patentansprüche

1. Innenrückblickvorrichtung (1), die zur Verwendung mit einem Kraftfahrzeug ausgelegt ist, umfassend:
ein Rückblickelement, das ein reflektierendes Element (10) und/oder ein Anzeigeelement umfasst;
eine Blende (32), die das Rückblickelement umgibt und von einem Gehäuse (60) umgeben ist; und
eine Montagebaugruppe (70), die dazu ausgestaltet ist, das Gehäuse (60, 60') an dem Fahrzeug zu befestigen;
wobei die Umlaufkante (31) der Blende (32) dem Fahrer des Fahrzeugs gegenüber freiliegt und für diesen sichtbar ist, wenn die Vorrichtung (1) normal in dem Fahrzeug montiert ist;
die Umlaufkante (31) eine gekrümmte Oberfläche umfasst, die zwischen der vorderen und/oder reflektierenden Oberfläche des Rückblickelements (10) und dem Gehäuse (60, 60') angeordnet ist;
**dadurch gekennzeichnet, dass**
das Gehäuse (60, 60') mit einem Vorsprung (65, 65') versehen ist, der von der Kante aus über die gekrümmte Oberfläche der Umlaufkante (31) der Blende (32) hinaus vorsteht, sodass er für den Fahrer sichtbar ist, wenn die Vorrichtung (1) normal in dem Fahrzeug montiert ist.

2. Vorrichtung nach Anspruch 1, wobei
der Vorsprung (65, 65') eine Stufe mit einer Höhe zwischen 0,1 und 2,1 mm bereitstellt und/oder die Krümmung der gekrümmten Oberfläche einen Radius von mindestens 2,5 mm aufweist.

3. Vorrichtung nach Anspruch 1 oder 2, ferner umfassend
mindestens eine oder mehrere Lichtbaugruppen (300), die vorzugsweise zumindest teilweise innerhalb des Innenraums der Blende angeordnet sind und/oder Licht in die Blende (32) hinein emittieren, um als Lichtleiter (400) zum Beleuchten mindestens eines Bereichs zwischen dem Gehäuse (60) und dem Rückblickelement (10) zu fungieren und/oder um Betätigungsmittel (430) bereitzustellen.

4. Vorrichtung nach Anspruch 3, wobei
die eine oder mehreren Lichtbaugruppen dazu ausgestaltet sind, eine Mehrzahl verschiedenfarbiger Lichter zu einer gesamten Oberfläche der Blende (32) zu führen, sodass die gesamte Blende (32) zu einer bestimmten Zeit eine Farbe aufweisen kann, und/oder
die eine oder mehreren Lichtbaugruppen dazu ausgestaltet sind, eine Mehrzahl verschiedenfarbiger Lichter verschiedenen Zonen der Blende (32) bereitzustellen, sodass verschiedene Zonen der Blende (32) zu einer bestimmten Zeit verschiedene Farben aufweisen können, und/oder
die eine oder mehreren Lichtbaugruppen dazu ausgestaltet sind, Licht mit einer ausgewählten Helligkeit und/oder Farbe zu mindestens einem ausgewählten Bereich oder der gesamten Oberfläche der Blende (32) zu führen.

5. Vorrichtung nach einem der vorangehenden Ansprüche, wobei
die Blende (32) aus einem Kunststoffsubstrat, das farbig, oberflächenbearbeitet, transparent und/oder beschichtet ist, gefertigt ist; und/oder
die Blende (32) beschichtet ist und eine Beschichtung der Blende (32) eine dekorative Beschichtung, eine Advanced-Surface-Technology-Oberflächenbeschichtung (AST-Oberflächenbeschichtung) und/oder ein Spektrumsregelungssystem ist; und/oder
die Blende (32) aus einem Polymersubstrat ausgebildet oder geformt ist.

6. Vorrichtung nach Anspruch 5, wobei
die Blende (32) transparent ist und eine chrombasierte Beschichtung umfasst, wodurch sie insbesondere die eine oder mehreren Lichtbaugruppen (300) unterhalb der Blende (32) unsichtbar macht, bis diese beleuchtet werden, wobei vorzugsweise die chrombasierte Beschichtung eine Legierung aus Chrom und einem Dotierstoff ist, wobei der Dotierstoff aus hexagonal dicht gepackten Übergangsmetallen ausgewählt ist, die Legierung eine Kristallstruktur einer primären kubisch-raumzentrierten Phase in Koexistenz mit einer sekundären omegahexagonal dicht gepackten Phase aufweist.

7. Vorrichtung nach Anspruch 5 oder 6, wobei
die Umlaufkante (31) und/oder die gekrümmte Oberfläche mit der chrombasierten Beschichtung versehen ist und/oder
die Umlaufkante (31) und/oder die gekrümmte Oberfläche mit mindestens einem Sensor der Sensormittel und/oder mindestens einem Element der Betätigungsmittel versehen ist, insbesondere eine Markierung, ein Icon und/oder eine Ausnehmung (430) zum Bereitstellen eines virtuellen Knopfes umfassend.

8. Vorrichtung nach einem der vorangehenden Ansprüche, ferner umfassend mindestens eine gedruckte Leiterplatte (40, 50), die zwischen dem Gehäuse (60) und dem Rückblickelement angeordnet ist, und/oder
ein Steuerungsmittel, das mit der einen oder den mehreren Lichtbaugruppen verbunden ist und/oder Sensormittel umfasst, die mit der mindestens einen gedruckten Leiterplatte (40, 50) verbunden sind.

9. Vorrichtung nach einem der Ansprüche 3 bis 8, wobei
die Blende (32) durch eine Gehäuseabdeckung (30, 30') bereitgestellt ist und
die mindestens eine gedruckte Leiterplatte (40, 50), die Sensormittel und/oder die eine oder mehreren Lichtbaugruppen zumindest teilweise zwischen der Gehäuseabdeckung (30, 30') und dem Gehäuse (60, 60') angeordnet ist/sind, wobei die Gehäuseabdeckung (30, 30') vorzugsweise ein Stützteil (33) für das reflektierende Element (10) umfasst, das mit mindestens einer Öffnung (34), insbesondere für einen Zugang zu den gedruckten Leitermitteln (40, 50), und/oder mit mindestens einem Fenster (35), insbesondere zur Übertragung von Strahlung an einen Sensor der Sensormittel, versehen ist.

10. Vorrichtung nach Anspruch 8 oder 9, wobei die Sensormittel Folgendes umfassen:
mindestens einen ersten Sensor (100, 102) in Form eines Time-of-Flight-Sensors (TOF-Sensor), insbesondere eine TOF-Kamera umfassend, und/oder mindestens einen zweiten Sensor (110) zum Ausführen einer Umgebungslichtsensor-Funktion (Ambient-Light-Sensor-Funktion, ALS-Funktion) und/oder
mindestens einen dritten Sensor (106, 108) in Form eines fotoelektrischen Sensors, vorzugsweise um von einer zusätzlichen, innerhalb des Fahrzeugs angeordneten Lichtquelle bestrahlt zu werden, und/oder mindestens einen vierten Sensor (104) in Form eines Berührungssensors, der vorzugsweise einen virtuellen Knopf bereitstellt.

11. Vorrichtung nach Anspruch 10, wobei
der erste Sensor (100, 102), ein erster zweiter Sensor, ein erster dritter Sensor (106) und/oder ein erster vierter Sensor (104) auf der Seite der Vorrichtung (1), welche die reflektierende Oberfläche des Rückblickelements (10) aufweist, insbesondere auf der reflektierenden Oberfläche oder hinter der reflektierenden Oberfläche, montiert ist, vorzugsweise mit einem Fenster (12) zur Übertragung von Strahlung versehen; und/oder
ein zweiter zweiter Sensor (110) auf der der reflektierenden Oberfläche gegenüberliegenden Seite der Vorrichtung (1) oder hinter der reflektierenden Oberfläche montiert ist, insbesondere mit einem Fenster (12) zur Übertragung von Strahlen versehen; und/oder
ein zweiter dritter Sensor und/oder ein zweiter vierter Sensor auf oder in der Blende (32) montiert ist; und/oder
ein dritter dritter Sensor (108) und/oder ein dritter vierter Sensor auf oder in dem Gehäuse (60) montiert ist.

12. Vorrichtung nach einem der vorangehenden Ansprüche, ferner umfassend mindestens ein Betätigungsmittel, vorzugsweise einen oder mehrere Knöpfe (80-84), insbesondere virtuelle Knöpfe, umfassend, das auf oder in der Blende (32), dem Gehäuse (60) und/oder auf dem reflektierenden Element (10) montiert ist, vorzugsweise einen Berührungssensor umfassend und/oder von einer Kamera (120), die mit dem Steuerungsmittel verbunden ist, überwacht.

13. Vorrichtung nach einem der Ansprüche 8 bis 12, wobei
das Steuerungsmittel dazu geeignet ist, Bewegungsmuster innerhalb eines ersten Abstandsintervalls relativ zu der reflektierenden Oberfläche zu detektieren, und/oder mindestens einen virtuellen Knopf innerhalb eines zweiten Abstandsintervalls bereitstellt, wobei vorzugsweise das erste Abstandsintervall in dem ersten Bereich des Steuerungsmittels bereitgestellt ist und das zweite Abstandsintervall in dem zweiten Bereich des Steuerungsmittels bereitgestellt ist, wobei insbesondere das zweite Abstandsintervall näher an der reflektierenden Oberfläche angeordnet ist als das erste Abstandsintervall.

14. Vorrichtung nach einem der Ansprüche 8 bis 13, wobei
das Steuerungsmittel dazu ausgestaltet ist, mit einer Steuerungseinheit des Fahrzeugs verbunden zu sein, insbesondere um den Zustand des Fahrzeugs und/oder die Umgebung des Fahrzeugs bei der Steuerung der Vorrichtung (1) zu berücksichtigen.

15. Vorrichtung nach einem der vorangehenden Ansprüche, wobei
das Rückblickelement einen Normalzustand und mindestens einen Blendschutzzustand, in welchem eine infolge eines an dem Rückblickelement reflektierten Lichts von einem Fahrer des Fahrzeugs erfahrene Blendung reduziert wird, aufweist, wobei das reflektierende Element (10) insbesondere ein elektrochromes Element (EC-Element) umfasst, das vorzugsweise von dem Steuerungsmittel gesteuert wird, wobei das elektrochrome Element vorzugsweise eine erste Elektrode umfasst..

16. Vorrichtung nach einem der Ansprüche 8 bis 15, wobei
die gedruckte Leiterplatte (40, 50) an dem Gehäuse (60) befestigt ist, vorzugsweise in Form einer gedruckten EC-Leiterplatte (40) und/oder einer gedruckten Sensor- und/oder Betätigungsmittel-Leiterplatte (50).

17. Vorrichtung nach einem der Ansprüche 8 bis 16, wobei
die gedruckte Leiterplatte (40, 50) geformt, gekrümmt und/oder mit mindestens einer Ausnehmung (44) versehen ist, um eine gegenseitige Beeinträchtigung mit einem Verbindungsmittel (72) der Montagebaugruppe (70) zu verhindern.

18. Fahrzeug, ausgestattet mit einer Innenrückblickvorrichtung nach einem der vorangehenden Ansprüche.

19. Fahrzeug nach Anspruch 18, ferner umfassend
mindestens eine Kamera (120) und/oder Lichtquelle, um die Betätigung des Betätigungsmittels zu detektieren.

## Revendications

1. Dispositif de rétroviseur interne (1) adapté à être utilisé avec un véhicule automobile, comprenant :
un élément de rétroviseur comprenant un élément réfléchissant (10) et/ou un élément d'affichage ;
une lunette (32) entourant l'élément de rétroviseur et entourée d'un boîtier (60) ; et
un ensemble de montage (70) qui est configuré pour fixer le boîtier (60, 60') au véhicule ; dans lequel
le bord périphérique (31) de la lunette (32) est exposé et est visible par le conducteur du véhicule lorsque ledit dispositif (1) est normalement monté dans le véhicule ;
ledit bord périphérique (31) comprend une surface incurvée disposée entre la surface avant et/ou réfléchissante de l'élément de rétroviseur (10) et le boîtier (60, 60') ;
**caractérisé en ce que**
le boîtier (60, 60') est pourvu d'une saillie (65, 65') se projetant du côté du bord, au-delà de la surface incurvée du bord périphérique (31) de la lunette (32) de manière à être visible par le conducteur lorsque ledit dispositif (1) est normalement monté dans le véhicule.

2. Dispositif selon la revendication 1, dans lequel
la saillie (65, 65') fournit une marche d'une hauteur comprise entre 0,1 et 2,1 mm, et/ou la courbure de la surface incurvée a un rayon d'au moins 2,5 mm.

3. Dispositif selon la revendication 1 ou 2, comprenant en outre
au moins un ou plusieurs ensembles d'éclairage (300), de préférence positionnés au moins en partie dans l'espace intérieur de la lunette et/ou émettant de la lumière dans la lunette (32) agissant en tant que guide de lumière (400) pour éclairer au moins une région entre le boîtier (60) et l'élément de rétroviseur (10) et/ou pour fournir des moyens d'actionnement (430).

4. Dispositif selon la revendication 3, dans lequel
les un ou plusieurs ensembles d'éclairage sont configurés pour diriger une pluralité de lumières de couleurs différentes vers une surface entière de la lunette (32) de telle sorte que la lunette entière (32) peut avoir une couleur à la fois, et/ou les un ou plusieurs ensembles d'éclairage sont configurés pour fournir une pluralité de lumières de couleurs différentes à différentes zones de la lunette (32) de telle sorte que différentes zones de la lunette (32) peuvent avoir des couleurs différentes à la fois, et/ou
les un ou plusieurs ensembles d'éclairage sont configurés pour diriger la lumière d'une luminosité et/ou d'une couleur sélectionnée vers au moins une zone sélectionnée ou la surface entière de la lunette (32).

5. Dispositif selon l'une quelconque des revendications précédentes, dans lequel la lunette (32) est fabriquée d'un substrat en plastique qui est coloré, fini en surface, transparent et/ou revêtu ; et/ou
la lunette (32) est revêtue et un revêtement de la lunette (32) est un revêtement décoratif, un revêtement de surface à technologie de surface avancée, *advanced surface technology* - AST, et/ou un système de contrôle spectral ; et/ou la lunette (32) est formée ou moulée à partir d'un substrat polymère.

6. Dispositif selon la revendication 5, dans lequel
la lunette (32) est transparente et comprend un revêtement à base de chrome, ce qui permet notamment de dissimuler les un ou plusieurs ensembles d'éclairage (300) sous la lunette (32) jusqu'à ce qu'ils soient allumés, dans lequel
de préférence, le revêtement à base de chrome est un alliage de chrome et d'un matériau dopant, le matériau dopant étant choisi parmi les métaux de transition à empilement hexagonal serré, l'alliage ayant une structure cristalline d'une phase cubique primaire centrée sur le corps en coexistence avec une phase secondaire oméga à empilement hexagonal serré.

7. Dispositif selon la revendication 5 ou 6, dans lequel
le bord périphérique (31) et/ou la surface incurvée sont pourvus d'un revêtement à base de chrome, et/ou
le bord périphérique (31) et/ou la surface incurvée sont pourvus d'au moins un capteur des moyens de détection et/ou d'au moins un élément de moyens d'actionnement, comprenant notamment une marque, une icône et/ou une découpe (430) fournissant un bouton virtuel.

8. Dispositif selon l'une quelconque des revendications précédentes, comprenant en outre
au moins une carte de circuit imprimé (40, 50), qui est disposée entre le boîtier (60) et l'élément de rétroviseur, et/ou
des moyens de commande connectés aux un ou plusieurs ensembles d'éclairage et/ou comprenant des moyens de détection connectés à l'au moins une carte de circuit imprimé (40, 50).

9. Dispositif selon l'une quelconque des revendications 3 à 8, dans lequel la lunette (32) est fournie par un couvercle de boîtier (30, 30'), et
l'au moins une carte de circuit imprimé (40, 50), le moyen de détection et/ou les un ou plusieurs ensembles d'éclairage est/sont positionné(s) au moins en partie entre le couvercle de boîtier (30, 30') et le boîtier (60, 60'),
le couvercle de boîtier (30, 30') comprenant de préférence une partie de support (33) pour l'élément réfléchissant (10) pourvu d'au moins une ouverture (34) notamment pour l'accès au moyen de circuit imprimé (40, 50) et/ou d'au moins une fenêtre (35) notamment pour la transmission d'un rayonnement à un capteur du moyen de détection.

10. Dispositif selon la revendication 8 ou 9, dans lequel
les moyens de détection comprennent
- au moins un premier capteur (100, 102) sous forme de capteur de temps de vol, *Time of Flight -* TOF, notamment comprenant une caméra TOF, et/ou
- au moins un deuxième capteur (110) pour réaliser une fonction de capteur de lumière ambiante, *Ambient Light Sensor-ALS,* et/ou
- au moins un troisième capteur (106, 108) sous la forme d'un capteur photoélectrique, de préférence destiné à être irradié par une source de lumière supplémentaire disposée à l'intérieur du véhicule, et/ou
- au moins un quatrième capteur (104) sous la forme d'un capteur tactile, fournissant de préférence un bouton virtuel.

11. Dispositif selon la revendication 10, dans lequel
le premier capteur (100, 102), un premier deuxième capteur, un premier troisième capteur (106) et/ou un premier quatrième capteur (104) est monté sur le côté du dispositif (1) présentant la surface réfléchissante de l'élément de rétroviseur (10), notamment sur la surface réfléchissante ou derrière la surface réfléchissante, de préférence pourvu d'une fenêtre (12) pour la transmission du rayonnement ; et/ou un deuxième deuxième capteur (110) est monté sur le côté du dispositif (1) opposé à la surface réfléchissante ou derrière la surface réfléchissante, notamment muni d'une fenêtre (12) pour la transmission du rayonnement ; et/ou
un deuxième troisième capteur et/ou un deuxième quatrième capteur est monté sur ou dans la lunette (32) ; et/ou
un troisième troisième capteur (108) et/ou un troisième quatrième capteur est monté sur ou dans le boîtier (60).

12. Dispositif selon l'une quelconque des revendications précédentes, comprenant en outre
au moins un moyen d'actionnement, comprenant de préférence un ou plusieurs boutons (80-84), notamment des boutons virtuels, montés sur ou dans la lunette (32), le boîtier (60) et/ou sur l'élément réfléchissant (10), comprenant de préférence un capteur tactile et/ou surveillé par une caméra (120), relié au moyen de commande.

13. Dispositif selon l'une quelconque des revendications 8 à 12, dans lequel le moyen de commande est adapté à la détection de mouvements dans un premier intervalle de distance par rapport à la surface réfléchissante et/ou fournit au moins un bouton virtuel dans un deuxième intervalle de distance, le premier intervalle de distance étant de préférence prévu dans la première zone du moyen de commande et le deuxième intervalle de distance étant prévu dans la deuxième zone du moyen de commande, notamment le deuxième intervalle de distance étant disposé plus près de la surface réfléchissante que le premier intervalle de distance.

14. Dispositif selon l'une quelconque des revendications 8 à 13, dans lequel le moyen de commande est configuré pour être connecté à une unité de commande du véhicule, notamment pour prendre en considération l'état du véhicule et/ou l'environnement du véhicule lors de la commande du dispositif (1).

15. Dispositif selon l'une quelconque des revendications précédentes, dans lequel l'élément de rétroviseur a un état normal et au moins un état anti-éblouissement, dans lequel un éblouissement subi par un conducteur du véhicule en raison de la lumière réfléchie sur l'élément de rétroviseur est réduit, l'élément réfléchissant (10) comprenant notamment un élément électrochrome (EC), qui est de préférence contrôlé par les moyens de commande, l'élément électrochrome comprenant de préférence une première électrode.

16. Dispositif selon l'une quelconque des revendications 8 à 15, dans lequel la carte de circuit imprimé (40, 50) est fixée au boîtier (60), de préférence sous la forme d'une carte de circuit imprimé EC (40) et/ou d'une carte de circuit imprimé de capteur et/ou de moyen d'actionnement (50).

17. Dispositif selon l'une quelconque des revendications 8 à 16, dans lequel la carte de circuit imprimé (40, 50) est façonnée, pliée et/ou pourvue d'au moins une découpe (44) pour éviter toute interférence avec les moyens de connexion (72) de l'ensemble de montage (70).

18. Véhicule équipé d'un dispositif de rétroviseur interne selon l'une quelconque des revendications précédentes.

19. Véhicule selon la revendication 18, comprenant en outre au moins une caméra (120) et/ou une source de lumière pour détecter l'actionnement des moyens d'actionnement.
